# EUROPEAN PATENT APPLICATION

(11) **EP 3 427 993 A1**
(43) Date of publication of application: **16.01.2019**
(21) Application number: 18182296.6
(22) Date of filing: 06.07.2018
(51) Int. Cl.: B60K 37/02, B60R 11/00, B60R 11/02

(54) **DISPLAY DEVICE FOR VEHICLE**

(30) Priority: 10.07.2017 JP 2017135048
(71) Applicant: TOYOTA JIDOSHA KABUSHIKI KAISHA, Toyota-shi, Aichi-ken 471-8571 (JP)
(72) Inventor: NARUMI, Kenji, Aichi-Ken (JP)
(74) Representative: Cabinet Beau de Loménie

(57) **Abstract**

The display device (10) for a vehicle has a display portion (22) that is provided at a ceiling of a vehicle cabin interior, and a control device (12) that, in a case in which a vehicle is traveling within a legal speed limit, carries out display control that displays, on the display portion (22), moving images that are based on the vehicle speed and a peripheral environment of the vehicle.

## Description

### Technical Field

The present disclosure relates to a display device for a vehicle.

### Background Art

As a display device for a vehicle, there is generally known a device that is disposed at an instrument panel or the like and displays various types of information, so that the driver can look at the various types of information while facing forward.

The technique disclosed in Japanese Patent Application Laid-Open (JP-A) No. 2016-215743 (Patent Document 1) for example is proposed as an example in which a display device for a vehicle is disposed at a place other than the instrument panel.

The technique of Patent Document 1 proposes that all of the plural windows and the ceiling of a vehicle that can be driven automatically display various types of contents as touch-panel displays that can be operated by touch.

However, in the technique disclosed in Patent Document 1, although various types of contents can be displayed, no contrivance has been made to make a vehicle occupant be able to drive comfortably, and therefore, there is room for improvement.

### SUMMARY

The present disclosure was made in view of the above-described circumstances, and an object thereof is to provide a display device for a vehicle by which a vehicle occupant can easily obtain an exhilarating feeling that corresponds to the vehicle speed.

In order to achieve the above-described object, an aspect includes: a display portion provided at a vehicle cabin interior; and a control section that, while a vehicle is traveling, carries out display control that displays, on the display portion, moving images that are based on vehicle speed and a peripheral environment of the vehicle.

In accordance with the above-described aspect, the display portion is provided at the vehicle cabin interior. The display portion is provided, for example, at the upper portion of the vehicle cabin interior, or at the ceiling of the vehicle cabin interior.

Further, while the vehicle is traveling, the control section carries out display control that displays, on the display portion, moving images that are based on the vehicle speed and the peripheral environment of the vehicle. In this way, due to moving images that are based on the vehicle speed and the peripheral environment being displayed on the display portion during traveling, the vehicle occupant can obtain an exhilarating feeling that corresponds to the vehicle speed.

Note that the display device for a vehicle may further include a detecting portion that detects a psychological state of a driver (e.g., the degree of excitement or the degree of calmness or the like of the driver), wherein the control section may change display speeds of the moving images in accordance with the psychological state detected by the detecting portion. By detecting the psychological state of the driver and changing the display speeds of the moving images in this way, the driver is adjusted to an appropriate psychological state, which can contribute to safe driving.

Further, the control section may carry out the display control in a case in which the vehicle is traveling within a legal speed limit. Namely, rendering that gives rise to an exhilarating feeling is carried out only at times when safe driving is being carried out. Therefore, both safe driving and an exhilarating feeling can be achieved, and the vehicle occupant can carry out stable driving by choice, and the effect of reducing dangerous driving and the number of traffic accidents can be expected.

Further, by providing the display portion at the upper portion of the vehicle cabin interior or at the ceiling of the vehicle cabin interior, an exhilarating feeling that is as if the vehicle occupant is riding in a convertible can be rendered by the moving images.

Moreover, the display portion may display images, which are formed from plural layers, as the moving images, and may display the moving images at speeds that are such that a display speed of each layer is different. Due thereto, rendering that is as if the actual landscape is streaming-by becomes possible.

As described above, in accordance with the present disclosure, there is the effect that a display device for a vehicle, by which a vehicle occupant can easily obtain an exhilarating feeling that corresponds to the vehicle speed, can be provided.

### BRIEF DESCRIPTION OF THE DRAWINGS

Fig. 1 is a block drawing showing the schematic structure of a display device for a vehicle relating to a first embodiment.
Fig. 2 is a drawing showing an example of displaying an image on a display portion that is provided at a ceiling.
Fig. 3A is a table showing examples of scrolling speeds (display speeds of images) per stratum (layer) of the image displayed on the display portion, and Fig. 3B is a table showing examples of types of images per layer that are displayed on the display portion.
Fig. 4 is a flowchart showing an example of the flow of display control that is carried out at a control device of the display device for a vehicle relating to the present embodiment.
Fig. 5 is a block drawing showing the schematic structure of a display device for a vehicle relating to a second embodiment.
Fig. 6 is a table showing an example of scrolling speeds of respective layers that are determined in advance in accordance with the psychological state of the vehicle occupant.
Fig. 7 is a flowchart showing an example of the flow of display control that is carried out at the control device of the display device for a vehicle relating to the present embodiment.

### DETAILED DESCRIPTION

Examples of embodiments of the present disclosure are described in detail hereinafter with reference to the drawings.

### (First Embodiment)

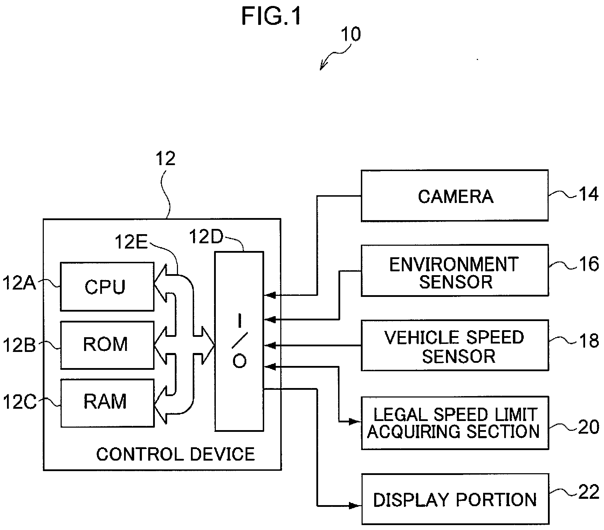

Fig. 1 is a block drawing showing the schematic structure of a display device for a vehicle relating to the present embodiment.

As shown in Fig. 1, a display device 10 for a vehicle relating to the present embodiment has a camera 14, an environment sensor 16, a vehicle speed sensor 18, a legal speed limit acquiring section 20, a display portion 22, and a control device 12 that serves as a control section.

The control device 12 is structured by a microcomputer at which a CPU (Central Processing Unit) 12A, a ROM (Read Only Memory) 12B, a RAM (Random Access Memory) 12C, and an I/O (input/output interface) 12D are respectively connected to a bus 12E.

The camera 14, the environment sensor 16, the vehicle speed sensor 18, the legal speed limit acquiring section 20 and the display portion 22 are connected to the I/O 12D. Further, a program for carrying out display control on the display portion 22, and the like, are stored in the ROM 12B of the control device 12. The RAM 12C is used as a work memory or the like for carrying out various types of computations and the like that are carried out by the CPU 12A.

The camera 14 is provided in a vicinity of the inner rearview mirror for example, and captures images of the region in front of the vehicle, and outputs the results of imaging to the control device 12.

The environment sensor 16 detects information, which relates to the environment, of, for example, an illuminance sensor, an outside air temperature sensor, a raindrop sensor and the like, and outputs the results of detection to the control device 12. Note that, instead of the environment sensor 16, there may be a form in which the results of detection of information relating to the environment are outputted to the control device 12 from an air conditioning control device that controls the air conditioning of the vehicle, or the like. Further, either one of the environment sensor 16 or the camera 14 may be omitted.

The vehicle speed sensor 18 detects the traveling speed of the vehicle, and outputs the results of detection to the control device 12. Note that, instead of the vehicle speed sensor 18, there may be a form in which vehicle speed information is outputted to the control device 12 from a driving control device that controls the driving source of the vehicle such as the engine or the like, or the like.

The legal speed limit acquiring section 20 acquires information of the legal speed limit, and outputs it to the control device 12. The legal speed limit acquiring section 20 may acquire information of the legal speed limit by, for example, extracting speed limit signs from the images captured by the camera 14. Or, the legal speed limit acquiring section 20 may acquire information of the legal speed limit from information that is included in map information of a navigation device. Or, the legal speed limit acquiring section 20 may acquire information of the legal speed limit from infrastructures such as an information collecting/managing center that collects and manages information of ETCs (Electronic Toll Collection Systems), VICS (Vehicle Information & Communications Systems) or the like, or the like.

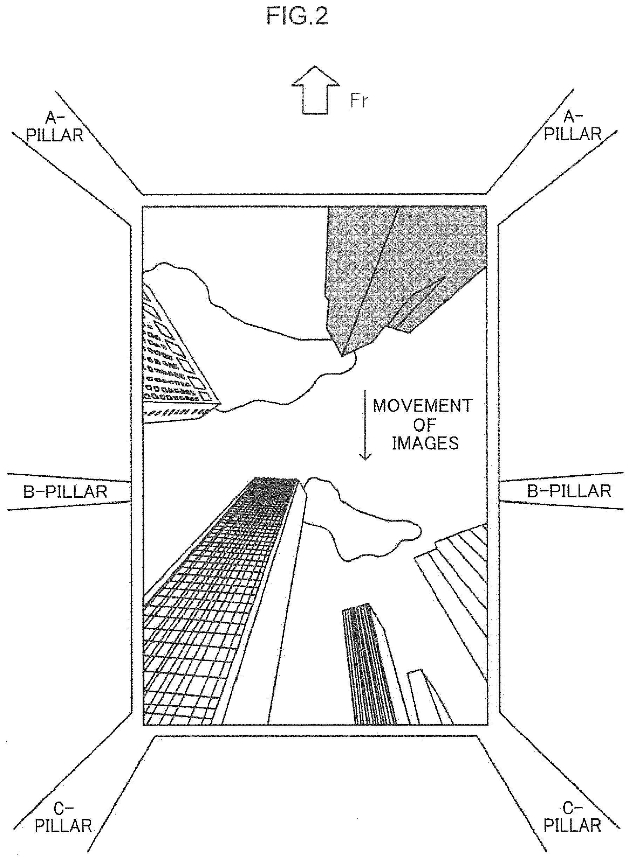

In the present embodiment, the display portion 22 is provided at the ceiling of the vehicle cabin interior, and displays moving images that respectively correspond to the vehicle speed and the peripheral environment of the vehicle. For example, as shown in Fig. 2, moving images are displayed on the ceiling portion of the vehicle cabin interior. The display portion 22 may display the moving images from the lower side of the ceiling by a projector or the like, or a liquid crystal display or an organic EL (electroluminescent) display or the like may be provided at the ceiling and the moving images may be displayed thereon.

The control device 12 carries out display control for displaying, on the display portion 22, moving images that are based on the vehicle speed and the peripheral environment of the vehicle.

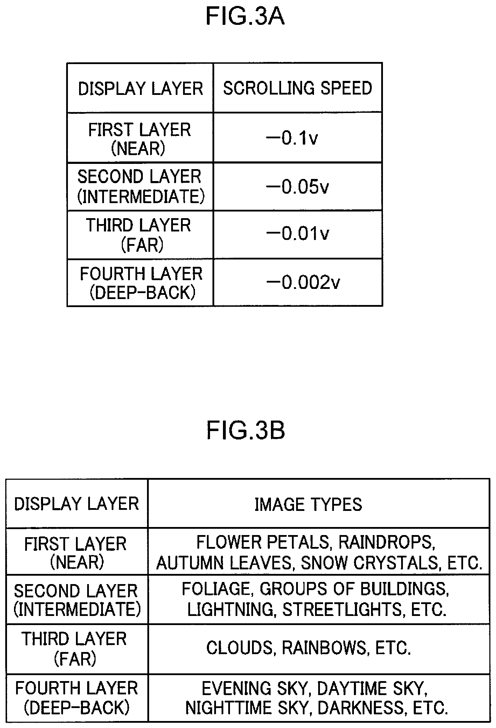

A concrete example of display control by the control device 12 is explained here. Fig. 3A is a table showing examples of scrolling speeds (display speeds of images) per stratum (layer) of the image displayed on the display portion 22. Fig. 3B is a table showing examples of types of images per layer that are displayed on the display portion 22.

In the present embodiment, the control device 12 carries out control to display, on the display portion 22, images that are structured by plural layers. Further, the control device 12 displays moving images on the display portion 22 by moving the images at display speeds (scrolling speeds) that differ per layer.

For example, as shown in Fig. 3A and Fig. 3B, images are classified into four types that are at a near distance (near), are at an intermediate distance (intermediate), are at a far distance (far) and are deep-back (deep-back), and the respective layers are determined in advance. Further, as shown in Fig. 3A, the scrolling speed is determined in advance for each layer. In the example of Fig. 3A, given that the vehicle speed in the advancing direction of the vehicle is +v (km/h), the scrolling speed of the first layer is -0.1 v. Further, the scrolling speed of the second layer is -0.05 v, the scrolling speed of the third layer is -0.01 v, and the scrolling speed of the fourth layer is -0.002 v. In this way, rendering that is as if the actual landscape is streaming-by becomes possible by making it such that, the further away the image, the lower the scrolling speed.

As shown in Fig. 3B for example, for each layer, predetermined types of images are set in advance respectively, and images are selected and displayed in accordance with the peripheral environment of the vehicle. In the example of Fig. 3B, flower petals, raindrops, autumn leaves, snow crystals and the like are set in advance for the first layer. Foliage, groups of buildings, lightning, streetlights and the like are set in advance for the second layer. Clouds, rainbows and the like are set in advance for the third layer. Evening sky, daytime sky, nighttime sky, darkness and the like are set in advance for the fourth layer. Note that there are cases in which the first through third layers are not displayed.

The control device 12 detects the captured images that have been captured by the camera 14 and the peripheral environment of the vehicle from the results of detection of the environment sensor 16, and selects image of layers corresponding to the peripheral environment that has been detected. For example, image types that become scenes that resemble the captured images and the information relating to the detected environment are selected per layer from the images types of the respective layers shown in Fig. 3B. Then, the scrolling speeds of the respective layers are determined on the basis of the scrolling speeds shown in Fig. 3A, from the vehicle speed detected by the vehicle speed sensor 18, and the images are displayed on the display portion 22.

Further, the control device 12 carries out the above-described display control in a case in which the vehicle speed detected by the vehicle speed sensor 18 is a speed that is within the legal speed limit acquired by the legal speed limit acquiring section 20.

Due thereto, moving images that correspond to the vehicle speed and the peripheral environment of the vehicle are displayed on the display portion 22, and an exhilarating feeling as if riding in a convertible can be presented. Further, because images are displayed on the display portion 22 at times of traveling at speeds that are within the legal speed limit, the exhilarating rendering is carried out only at times when safe driving is being carried out, and both safe driving and an exhilarating feeling can be achieved.

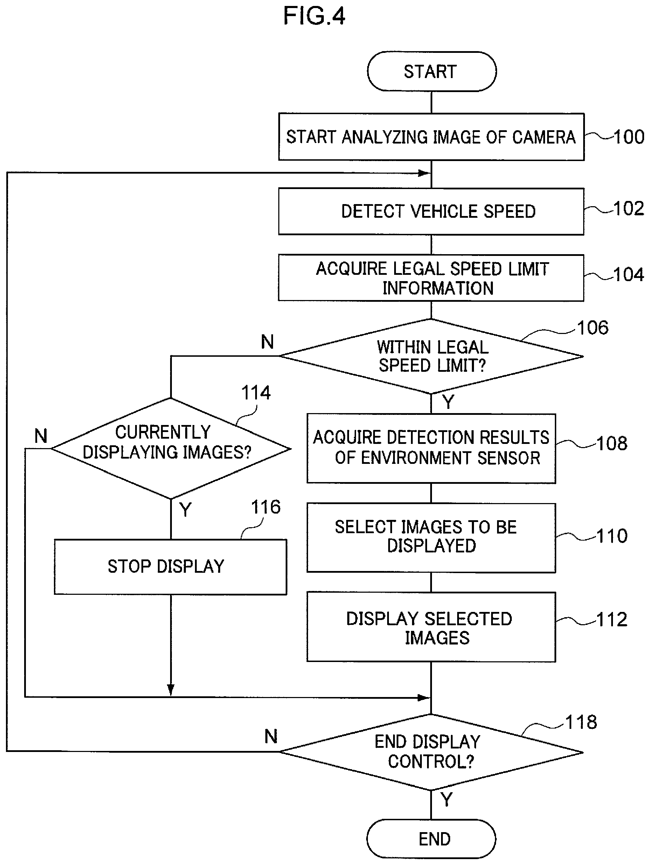

Concrete processings, which are carried out at the control device 12 of the display device 10 for a vehicle relating to the present embodiment that is structured as described above, are described next. Fig. 4 is a flowchart showing an example of the flow of display control that is carried out at the control device 12 of the display device 10 for a vehicle relating to the present embodiment. Note that the processings of Fig. 4 start, for example, in a case in which a display instruction is given by a switch for displaying images on the display portion 22 or the like, and the vehicle starts traveling.

In step 100, the CPU 12A carries out image analysis on the captured image that has been captured by the camera 14, and the routine moves on to step 102. Namely, the CPU 12A carries out image analysis on the captured image, and detects the peripheral environment of the vehicle. For example, the CPU 12A analyzes the captured image in order to determine the types of images of the first through fourth layers that are to be displayed on the display portion 22, and detects the peripheral environment.

In step 102, the CPU 12A acquires the results of detection of the vehicle speed sensor 18 and detects the vehicle speed, and the routine moves on to step 104.

In step 104, the CPU 12A acquires information of the legal speed limit that was acquired by the legal speed limit acquiring section 20, and the routine moves on to step 106. As described above, the information of the legal speed limit may be acquired by, for example, extracting a speed limit sign from the image captured by the camera 14. Or, information of the legal speed limit may be acquired from information that is included in map information of a navigation device. Or, information of the legal speed limit may be acquired from infrastructures such as an information collecting/managing center or the like.

In step 106, on the basis of the acquired information of the legal speed limit, the CPU 12A judges whether or not the vehicle is traveling within the legal speed limit. If this judgment is affirmative, the routine moves on to step 108. If this judgment is negative, the routine moves on to step 114.

In step 108, the CPU 12A acquires the results of detection of the environment sensor 16, and the routine moves on to step 110. For example, the CPU 12A acquires information, which relates to the environment, of an illuminance sensor, an outside air temperature sensor, a raindrop sensor, and the like.

In step 110, the CPU 12A specifies the respective layers from among the predetermined first through fourth layers, and selects images that are to be displayed, and the routine moves on to step 112. For example, on the basis of the image analysis of the image captured by the camera 14 and the results of detection of the environment sensor 16, the CPU 12A selects image types of the respective layers such that there will become a scene that resembles the captured image. More concretely, in a case in which clear weather is specified from the captured image and the results of detection of the environment sensor 16 (the illuminance, the outside air temperature, the absence/presence of raindrops, and the like), the CPU 12A selects no image for the first layer. Further, in a case in which a group of buildings is detected from the captured image, the CPU 12A selects the image of the group of buildings for the second layer. In a case in which clouds are detected from the captured image, the CPU 12A selects the image of the clouds for the third layer. Further, in a case in which daytime sky is detected from the captured image and the results of detection of the environment sensor 16, the CPU 12A selects the image of the daytime sky for the fourth layer.

In step 112, the CPU 12A carries out control so as to display the selected images on the display portion 22, and the routine moves on to step 118. Due thereto, in a case in which the vehicle is traveling within the legal speed limit, images of the first through the fourth layers, which have been selected in accordance with the peripheral environment, are displayed on the display portion 22. Further, as shown in Fig. 3A, with respect to the scrolling speeds of the respective layers, the images of the respective layers are displayed so as to stream at speeds corresponding to the vehicle speed. For example, in the example of the selections of images described in step 110, the moving image shown in Fig. 2 is displayed on the display portion 22. In this way, when the vehicle is traveling within the legal speed limit, images that correspond to the peripheral environment are displayed on the ceiling, and therefore, an exhilarating feeling can be imparted to the vehicle occupants.

On the other hand, in step 114, the CPU 12A judges whether or not images are currently being displayed on the display portion 22. In this judgment, it is judged whether or not above-described steps 108 through 112 have already been carried out, and images are being displayed on the display portion 22. If this judgment is affirmative, the routine moves on to step 116. If this judgment is negative, the routine moves on to step 118.

In step 116, the CPU 12A stops the images displayed on the display portion 22, and the routine moves on to step 118. Namely, in cases other than traveling within the legal speed limit, the display of the display portion 22 is stopped.

In step 118, the CPU 12A judges whether or not the display control is to be ended. This judgment may be carried out, for example, by judging whether or not a vehicle occupant has given a stop instruction by using the unillustrated switch or the like. Or, it may be judged whether or not traveling has ended and an unillustrated ignition switch has been turned off. If this judgment is negative, the routine returns to step 102, and the above-described processings are repeated. If this judgment is affirmative, the series of display control processings is ended.

In this way, in the present embodiment, when the vehicle is traveling within the legal speed limit, images that are based on the vehicle speed and the peripheral environment of the vehicle are displayed on the display portion 22, and, due thereto, an exhilarating feeling can be presented by the images that are displayed on the ceiling. Further, because the images are displayed on the display portion 22 only in cases in which the vehicle is traveling within the legal speed limit, rendering that gives rise to an exhilarating feeling is carried out only at times of safe driving. Therefore, both safe driving and an exhilarating feeling can be achieved, and the vehicle occupant carries out stable driving by choice, and the effect of reducing dangerous driving and the number of traffic accidents can be expected.

### (Second Embodiment)

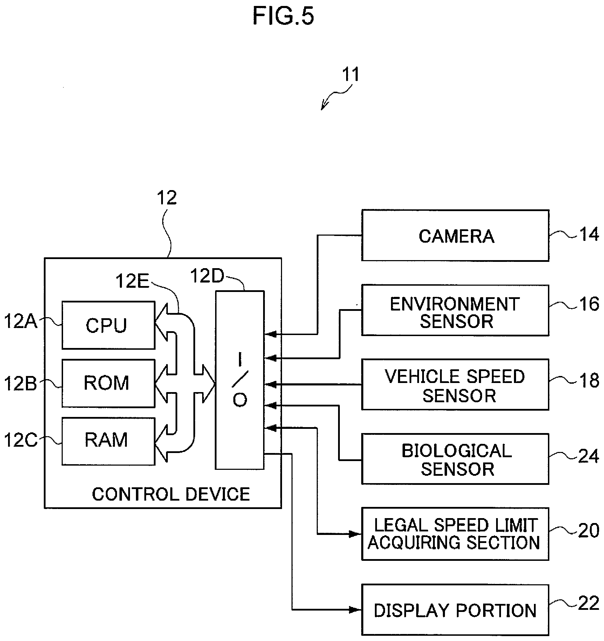

A display device for a vehicle relating to a second embodiment is described next. Fig. 5 is a block drawing showing the schematic structure of a display device for a vehicle relating to the present embodiment. Note that portions that are the same as those of the first embodiment are denoted by the same reference numerals, and detailed description thereof is omitted.

As shown in Fig. 5, a display device 11 for a vehicle relating to the present embodiment differs from the first embodiment only with regard to the point that the display device 11 for a vehicle further includes a biological sensor 24.

The biological sensor 24 is connected to the I/O 12D of the control device 12, and detects biometric information of a vehicle occupant, and outputs the results of detection of the control device 12. For example, a heartbeat sensor, a respiration sensor, a perspiration sensor or the like can be used as the biological sensor 24, and at least one type of biometric information among heartbeat, respiration and perspiration is detected. The control device 12 detects the psychological state (e.g., the degree of excitation or the degree of calmness or the like) of the driver from the results of detection of the biological sensor 24. In the present embodiment, the control device 12 detects the psychological state on the basis of the results of detection of the biological sensor 24, and, in accordance with the detected psychological state, changes the scrolling speeds of the first through fourth layers and displays images. Note that, in the present embodiment, the biological sensor 24 and the control device 12 correspond to the detecting portion.

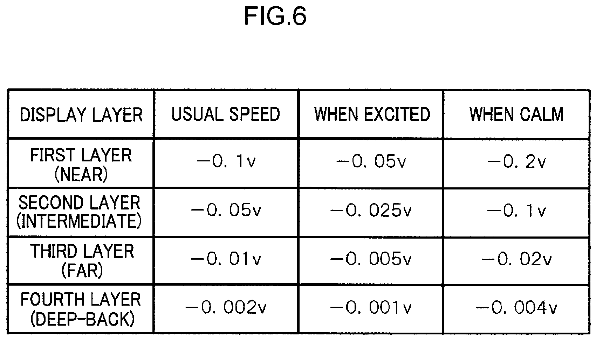

Concretely, for example, from the results of detection of the biological sensor 24, the control device 12 judges the psychological state of the driver (whether the driver is in an excited state, or whether the driver is in a calm state, or whether the driver is in a usual state), and carries out control so as to display the images on the display portion 22 at scrolling speeds that are set in advance in accordance with psychological states. The scrolling speeds that are set in advance in accordance with psychological states of a vehicle occupant are stored in advance in the ROM 12B or the like. As an example, as shown in Fig. 6, in the case of a usual speed, the scrolling speed is -0.1 v for the first layer, -0.05 v for the second layer, -0.01 v for the third layer, and -0.002 v for the fourth layer. Further, at times when the vehicle occupant is excited, the scrolling speed is -0.05 v for the first layer, -0.025 v for the second layer, -0.005 v for the third layer, and -0.001 v for the fourth layer. At times when the vehicle occupant is calm, the scrolling speed is -0.2 v for the first layer, -0.1 v for the second layer, -0.02 v for the third layer, and -0.004 v for the fourth layer. In the present embodiment, when the vehicle occupant is excited, the scrolling speeds are made to be slower than the usual speeds. On the other hand, when the vehicle occupant is calm, the scrolling speeds are made to be faster than the usual speeds in order to obtain the appropriate level of excitement.

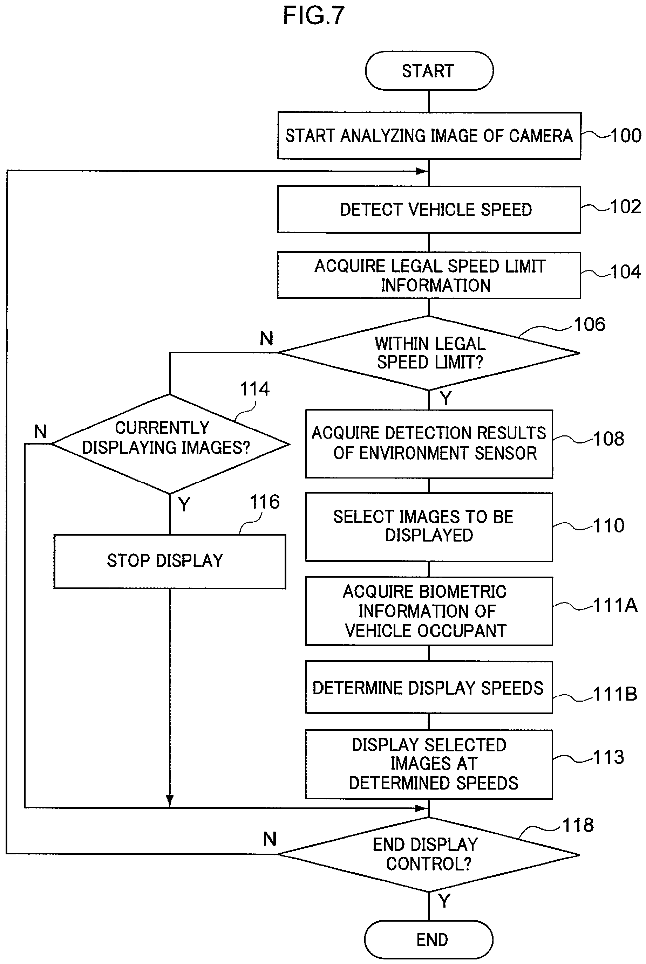

Concrete processings, which are carried out at the control device 12 of the display device 11 for a vehicle relating to the present embodiment that is structured as described above, are described next. Fig. 7 is a flowchart showing an example of the flow of display control that is carried out at the control device 12 of the display device 11 for a vehicle relating to the present embodiment. Note that the processings of Fig. 7 start, for example, in a case in which a display instruction is given by a switch for displaying images on the display portion 22 or the like, and the vehicle starts traveling. Further, processings that are the same as those of Fig. 4 are described by using the same reference numerals.

In step 100, the CPU 12A carries out image analysis on the captured image that has been captured by the camera 14, and the routine moves on to step 102. Namely, the CPU 12A carries out image analysis on the captured image, and detects the peripheral environment of the vehicle. For example, the CPU 12A detects the peripheral environment by analyzing portions corresponding to the first through fourth layers from the captured image.

In step 102, the CPU 12A acquires the results of detection of the vehicle speed sensor 18 and detects the vehicle speed, and the routine moves on to step 104.

In step 104, the CPU 12A acquires information of the legal speed limit that was acquired by the legal speed limit acquiring section 20, and the routine moves on to step 106. As described above, the information of the legal speed limit may be acquired by, for example, extracting a speed limit sign from the image captured by the camera 14. Or, information of the legal speed limit may be acquired from information that is included in map information of a navigation device. Or, information of the legal speed limit may be acquired from infrastructures such as an information collecting/managing center or the like.

In step 106, on the basis of the acquired information of the legal speed limit, the CPU 12A judges whether or not the vehicle is traveling within the legal speed limit. If this judgment is affirmative, the routine moves on to step 108. If this judgment is negative, the routine moves on to step 114.

In step 108, the CPU 12A acquires the results of detection of the environment sensor 16, and the routine moves on to step 110. For example, the CPU 12A acquires information, which relates to the environment, of an illuminance sensor, an outside air temperature sensor, a raindrop sensor, and the like.

In step 110, the CPU 12A specifies respective layers from among the predetermined first through fourth layers, and selects images that are to be displayed, and the routine moves on to step 111A. For example, on the basis of the image analysis of the image captured by the camera 14 and the results of detection of the environment sensor 16, the CPU 12A selects image types of the respective layers such that there will become a scene that resembles the captured image. More concretely, in a case in which clear weather is specified from the captured image and the results of detection of the environment sensor 16 (the illuminance, the outside air temperature, the absence/presence of raindrops, and the like), the CPU 12A selects no image for the first layer. Further, in a case in which a group of buildings is detected from the captured image, the CPU 12A selects the image of the group of buildings for the second layer. In a case in which clouds are detected from the captured image, the CPU 12A selects the image of the clouds for the third layer. Further, in a case in which daytime sky is detected from the captured image and the results of detection of the environment sensor 16, the CPU 12A selects the image of the daytime sky for the fourth layer.

In step 111 A, by acquiring the results of detection of the biological sensor 24, the CPU 12A acquires biometric information of the vehicle occupant, and the routine moves on to step 111B.

In step 111B, the CPU 12A determines the display speeds on the basis of the acquired biometric information, and the routine moves on to step 113. Namely, the CPU 12A specifies the psychological state of the vehicle occupant (whether the vehicle occupant is in a usual state, or whether the vehicle occupant is in an excited state, or whether the vehicle occupant is in a calm state) from the results of detection of the biological sensor 24, and determines the scrolling speeds of the respective layers of the image. For example, in a case in which a heartbeat sensor is used as the biological sensor, by setting in advance a range of a normal number of heartbeats, a range of a number of heartbeats when excited, and a range of a number of heartbeats when calm, the CPU 12A judges which of the ranges the detected number of heartbeats is in. Due thereto, the CPU 12A specifies the psychological state of the vehicle occupant, and reads-out the corresponding scrolling speed.

In step 113, the CPU 12A carries out control so as to display the selected images on the display portion 22 such that the respective layers of the images move at the determined speeds, and the routine moves on to step 118. Due thereto, in a case in which the vehicle is traveling within the legal speed limit, images of the first through the fourth layers, which have been selected in accordance with the peripheral environment, are displayed on the display portion 22. Further, as shown in Fig. 3A, with respect to the scrolling speeds of the respective layers, the images of the respective layers are displayed so as to stream at speeds corresponding to the vehicle speed. In this way, when the vehicle is traveling within the legal speed limit, images that correspond to the peripheral environment are displayed on the ceiling, and therefore, an exhilarating feeling can be imparted to the vehicle occupant. Further, because the images are moved at display speeds that are set in advance in accordance with psychological states of the vehicle occupant, the vehicle occupant can be settled into a desirable psychological state.

On the other hand, in step 114, the CPU 12A judges whether or not images are currently being displayed on the display portion 22. In this judgment, it is judged whether or not above-described steps 108 through 112 have already been carried out, and images are being displayed on the display portion 22. If this judgment is affirmative, the routine moves on to step 116. If this judgment is negative, the routine moves on to step 118.

In step 116, the CPU 12A stops the images displayed on the display portion 22, and the routine moves on to step 118. Namely, in cases other than traveling within the legal speed limit, the display of the display portion 22 is stopped.

In step 118, the CPU 12A judges whether or not the display control is to be ended. This judgment may be carried out, for example, by judging whether or not a vehicle occupant has given a stop instruction by using the unillustrated switch or the like. Or, it may be judged whether or not traveling has ended and an unillustrated ignition switch has been turned off. If this judgment is negative, the routine returns to step 102, and the above-described processings are repeated. If this judgment is affirmative, the series of display control processings is ended.

In this way, in the present embodiment, as compared with the first embodiment, by changing the display speeds of the images in accordance with the psychological state of the vehicle occupant, the psychological state of the vehicle occupant can be adjusted to a desirable psychological state. Therefore, the driver's concentration on driving can be improved, and the effect of decreasing traffic accidents can be expected.

Note that the above embodiments describe examples in which the display portion 22 is provided at the ceiling, and images are displayed on the ceiling. However, the present disclosure is not limited to this. For example, images may be displayed on the front windshield glass, the side window glasses, the rear windshield, the pillars, or the like. Or, there may be a form in which images are displayed on the upper portion of the vehicle cabin interior (the ceiling, and the upper portions of the front windshield glass, the side window glasses, the rear windshield and the pillars). Or, there may be a form in which the images are displayed on interior finishings or the like within the vehicle cabin.

Further, description has been given in which the processings that are carried out by the control device 12 in the above respective embodiments are software processings that are carried out by the execution of programs. However, the present disclosure is not limited to this. For example, the processings may be processings that are carried out by hardware. Or, the processings may be processings that combine both software and hardware. Further, when the processings are software processings, a program may be stored on any of various types of storage media and distributed.

Moreover, the present disclosure is not limited to the above, and, other than the above, can of course be implemented by being modified in various ways within a scope that does not depart from the gist thereof.

## Claims

1. A display device (10) for a vehicle, comprising:
a display portion (22) provided at a vehicle cabin interior; and
a control section (12) configured, while a vehicle is traveling, to carry out display control that displays, on the display portion (22), moving images that are based on vehicle speed and a peripheral environment of the vehicle.

2. The display device (10) for a vehicle of claim 1, further comprising a detecting portion (12) configured to detect a psychological state of a driver,
wherein the control section (12) is configured to change display speeds of the moving images in accordance with the psychological state detected by the detecting portion (12).

3. The display device (10) for a vehicle of claim 1 or claim 2, wherein the control section (12) is configured to carry out the display control in a case in which the vehicle is traveling within a legal speed limit.

4. The display device (10) for a vehicle of any one of claims 1 through 3, wherein the display portion (22) is provided at an upper portion of the vehicle cabin interior, or at a ceiling of the vehicle cabin interior.

5. The display device (10) for a vehicle of any one of claims 1 through 4, wherein the display portion (22) is configured to display images, which are formed from a plurality of layers, as the moving images, and to display the moving images at speeds that are such that a display speed of each layer is different.
